(19) **Europäisches Patentamt**

**European Patent Office**

**Office européen des brevets**

(11) Veröffentlichungsnummer: **0 099 045 B1**

(12) **EUROPÄISCHE PATENTSCHRIFT**

(45) Veröffentlichungstag der Patentschrift: **29.01.86**

(51) Int. Cl.⁴: **B 29 B 7/00**

(21) Anmeldenummer: **83106532.1**

(22) Anmeldetag: **05.07.83**

(54) Verfahren und Mischkopf zum Herstellen eines Kunststoff bildenden Reaktionsgemisches aus mindestens zwei fliessfähigen Reaktionskomponenten.

(30) Priorität: **15.07.82 DE 3226412**

(43) Veröffentlichungstag der Anmeldung: **25.01.84 Patentblatt 84/4**

(45) Bekanntmachung des Hinweises auf die Patenterteilung: **29.01.86 Patentblatt 86/5**

(84) Benannte Vertragsstaaten: **BE DE FR GB IT**

(56) Entgegenhaltungen:
**DE - A - 2 847 504**
**DE - B - 2 031 739**
**DE - B - 2 513 492**

(73) Patentinhaber: **MASCHINENFABRIK HENNECKE GMBH, Postfach 1180, D-5205 St. Augustin 1 (DE)**

(72) Erfinder: **Proksa, Ferdinand, Dr., Am Arenzberg 9, D-5090 Leverkusen 3 (DE)**
Erfinder: **Sulzbach, Hans-Michael, Dipl.-Ing., Herman-Löns-Strasse 12, D-5330 Königswinter 51 (DE)**
Erfinder: **Raffel, Reiner, Dipl.-Ing., Müschbungert 2, D-5200 Siegburg (DE)**
Erfinder: **Althausen, Ferdinand, Niederwennerscheid 48, D-5206 Neunkirchen (DE)**

(74) Vertreter: **Müller, Heinz-Gerd, Dipl.-Ing. et al, BAYER AG Konzernverwaltung RP Patentabteilung, D-5090 Leverkusen 1, Bayerwerk (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren und einen Mischkopf zum Herstellen eines Kunststoff bildenden Reaktionsgemisches aus mindestens zwei fliessfähigen Reaktionskomponenten, wobei die Reaktionskomponenten stirnseitig in eine Mischkammer eingedüst, an deren Boden umgelenkt, im Gegenstrom zum eintretenden Strahl zurückgeführt und dabei im Grenzflächenbereich vermischt werden und anschliessend das fertige Reaktionsgemisch abgeführt wird.

Solche Reaktionsgemische bilden je nach den Ausgangskomponenten massive, mikrozellige Stoffe oder Schaumstoffe, wie beispielsweise Polyurethan-Schaumstoffe. Die Herstellung von Formteilen aus solchen Reaktionsgemischen in Formwerkzeugen stellt trotz des erreichten hohen Standards immer neue Ansprüche bezüglich der Maschinen- und Fertigungstechnik sowie der einwandfreien Beschaffenheit der Formteile, wozu eine homogene Vermischung der Reaktionskomponenten Voraussetzung ist.

Um die gestellten Anforderungen zu erfüllen, haben sich Hochdruckmischköpfe mit Gegenstrominjektion und gegebenenfalls Reinigungsstössel durchgesetzt (US-A-3 263 928). Da diese Mischköpfe zum Füllen des Hohlraumes eines Formwerkzeuges relativ geringe Gemischmengen bei hohem zeitlichen Durchsatz im Durchlaufmischverfahren herstellen müssen, ergaben sich Unzulänglichkeiten in der Vermischungsintensität. Auch beim Gemischeintrag in den Hohlraum von Formwerkzeugen machten sich wegen der turbulenten Strömung Nachteile durch Einschlagen von Luft bemerkbar. Man hat diese Nachteile durch der eigentlichen Mischkammer nachgeschaltete Nachmischer oder Drosselstellen zu beheben versucht, die einerseits für eine entsprechende Nachvermischung und andererseits, meist in Verbindung mit einem langen Auslaufkanal, für eine laminare Strömung beim Eintritt in den Formhohlraum sorgen sollten (US-A-3 924 989, US-A-3 975 128, US-A-4 141 470).

Diese Weiterentwicklungen werden zwar zur Zeit den gestellten Anforderungen gerecht, sind aber konstruktiv so aufwendig und störanfällig, dass nach vereinfachten Lösungen gesucht wird.

Es ist auch ein Mischkopf bekannt (DE-B-2 031 739 entspr. US-A-3 771 963), bei welchem eine Zweistoffdüse stirnseitig in eine Mischkammer mündet, welche einen oder mehrere Auslässe etwa in halber Höhe von ihrem Boden aufweist. Der eintretende Strahl trifft auf den Mischkammerboden auf, und das sich bildende Reaktionsgemisch wird dabei im Gegenstrom zum eintretenden Strahl umgelenkt und vermischt sich im Grenzflächenbereich. Die Gegenströmung wird aber aufgrund der geometrischen Gestaltung der Mischkammer und der Lage der Auslassöffnungen sehr bald abgebaut, und es findet eine starke Turbulenz in der Mischkammer statt. Das Gemisch schiesst dann, immer noch unter starker Turbulenz, mit hoher Geschwindigkeit aus den Auslassöffnungen heraus und schlägt im auszufüllenden Raum vorhandene Luft in unerwünschter Weise in sich ein. Die Mischkammer muss durch Spülung gereinigt werden oder verbleibt als sogenannte «verlorene Mischkammer» im Formteil, was für die meisten Anwendungen aus Gründen der Festigkeit und Ästhetik nicht akzeptabel ist.

Bei einem weiteren bekannten Mischkopf (DE-C-1 779 037) sind schwenkbare Einspritzdüsen vorgesehen, die zumindest während des Beginns der Vermischung entgegen der Auslassöffnung in die Mischkammer weisen. Dabei schliessen sie zwischen sich einen Winkel von 45 bis 160° ein. Bei dieser Schrägstellung der Einspritzdüsen ist eine teilweise Gegenstrominjektionswirkung vorhanden bzw. es findet eine Querstromvermischung statt. Dementsprechend stellt sich eine unkontrollierbare Turbulenz in der Mischkammer ein, wodurch nicht unbedingt eine ausreichende Vermischung im Sinne der heutigen Anforderungen gewährleistet ist. Auch diese Mischkammer lässt sich nur durch Spülen reinigen.

Aus US-A-3 982 870 ist schliesslich noch ein selbstreinigender Mischkopf bekannt, der von demjenigen gemäss US-A-3 263 928 ausgeht. Er ist in der einen Formwerkzeughälfte angeordnet, während der Mischkammer gegenüber in der anderen Formwerkzeughälfte eine Vertiefung gleichen Durchmessers vorgesehen ist, in der ebenfalls ein Ausstosskolben geführt ist. Diese Vertiefung dient zum Auffangen der ersten unvermischten oder noch schlecht vermischten Gemischanteile, welche in dieser Vertiefung mit dem nachfolgenden Reaktionsgemisch verwirbelt werden sollen. Der eigentliche Mischvorgang findet aber im Mischkopf selbst statt.

Die Aufgabe besteht darin, ein Verfahren zu finden, bei welchem die Vermischung unter hoher Intensität in einer einzigen Zone erfolgt und der die Mischkammer verlassende Reaktionsgemischstrom bereits einen hohen Beruhigungsgrad erreicht hat. Ausserdem soll ein Mischkopf geschaffen werden, der im Zusammenhang mit der Art des Einbringens der Reaktionskomponenten und des Gemischaustrags sowohl die erforderliche Vermischungsintensität als auch ein möglichst gleichmässiges Ausströmen aus der Mischkammer gewährleistet, wobei dieser Mischkopf in bekannter Weise auch noch selbstreinigend sein soll.

Bezüglich des gattungsgemässen Verfahrens wird diese Aufgabe dadurch gelöst, dass der eintretende Strahl durch einen zwischen der Eintrittsöffnung und der Mischkammer vorhandenen Zwischenraum geführt und dem eintretenden Strahl eine grössere Eindringtiefe (Mischkammertiefe) erlaubt wird als dem äusseren Durchmesser der Rückströmung entspricht; dass das Reaktionsgemisch im Zwischenraum abgeführt wird und am Ende des Mischvorganges das restliche in der Mischkammer befindliche Reaktionsgemisch selbstreinigend ausgestossen wird.

Dadurch wird eine intensive Vermischung auf kleinstem Raum, insbesondere an der Grenzfläche zwischen der ausgeprägten Gegenströmung und dem eintretenden Strahl, erzielt. Da Turbulenz im wesentlichen nur an der Grenzfläche erfolgt, beruhigen sich zur Auslassöffnung hin die äusseren Strömungsschichten schnell und fliessen durch den Zwischenraum im wesentlichen laminar in den Formhohlraum ein. Auf Nachvermischung kann verzichtet werden.

Vorzugsweise wird das erzeugte Reaktionsgemisch in Form einer Quellströmung aus der Mischzone abgeführt.

Diese Massnahme ist besonders günstig, weil dann die Strömungsgeschwindigkeit schnell abnimmt und keinerlei Überwälzungen und Lufteinschläge zu befürchten sind.

Nach einer weiteren besonderen Durchführungsform des Verfahrens ist es möglich, jede Reaktionskomponente in Form mindestens eines separaten Strahls einzudüsen.

Diese Ausführungsform kann bei schwer mischbaren Komponenten günstig sein.

Man kann diese Art der Eintragung auch noch dadurch begünstigen, dass die Strahlen unter einem Winkel von maximal 10° zur Achse der Mischzone eingedüst werden.

Durch diese geringe Neigung bleibt die erwünschte Bildung der Grenzfläche erhalten, aber man erhält einen Schnittpunkt der Strahlen, wo zusätzlich eine punktuelle Verwirbelung stattfindet.

Nach einer weiteren besonderen Durchführungsform des Verfahrens wird der Staudruck in der Mischkammer durch Wahl des Querschnittverhältnisses von eintretendem Strahl und Rückströmung eingestellt.

Auf diese Weise lässt sich bei der Herstellung von schaumstoffbildenden Gemischen auch ohne Staukörper oder Auslaufdrosselung der für die Zellbildung bzw. Zellgrösse mitverantwortliche Mischkammerdruck beeinflussen.

Eine besonders günstiger Effekt des neuen Verfahrens ist darin zu sehen, dass durch den eintretenden Strahl eine sogenannte «Kammerung» in der Mischkammer erfolgt, d.h. dass dieser Strahl, der durch die eigentliche Auslassöffnung der Mischkammer eintritt, für die Rückströmung als Drosselorgan wirkt.

Der Mischkopf zur Durchführung des genannten Verfahrens geht aus von einem Gehäuse mit einer zylindrischen Mischkammer, in welche stirnseitig mindestens eine Eintrittsöffnung für die Reaktionskomponenten hineinweist und welche eine Auslassöffnung für das Reaktionsgemisch aufweist.

Das Neue ist in der Kombination folgender Merkmale zu sehen:

a) Die Auslassöffnung befindet sich auf der gleichen Seite wie die Eintrittsöffnung,

b) das der Eintrittsöffnung gegenüberliegende Ende der Mischkammer ist durch die Stirnfläche eines Ausstosskolbens gebildet und

c) die Tiefe der Mischkammer ist grösser als ihr Durchmesser.

Dadurch wird erreicht, dass die Reaktionskomponenten im Gleichstrom eingetragen werden und dass das sich bildende Gemisch beim Rückströmen zur Auslassöffnung hin im ausgeprägten Gegenstrom zu dem Injektionsstrahl an den Grenzflächen und an der Mischkammerwandung eine starke Verwirbelung erfährt, wodurch der Mischvorgang stark intensiviert wird und das Reaktionsgemisch dann—sich schnell beruhigend—die Mischkammer verlässt. Durch entsprechende Wahl des Durchmessers der Mischkammer sowie ihrer Tiefe, unter Berücksichtigung der Injektionsintensität, lässt sich die Vermischung optimieren. Der an sich bekannte Ausstosskolben gewährleistet die Reinigung der Mischkammer. Die schlanke Gestaltung der Mischkammer begünstigt die Wirbelbildung an der Grenzfläche zwischen Injektionsstrahl und Rückströmung. Vorzugsweise beträgt die Tiefe der Mischkammer das Zwei- bis Fünffache ihres Durchmessers, wodurch eine ausreichende Wirbelstrecke erzielt wird.

Bei dem neuen Mischkopf kann z.B. die aus DE-B-2031739 bekannte Mehrstoffdüse verwendet werden, bei der sich die Reaktionskomponenten kurz vor dem Eintritt in die Mischkammer vereinigen. Es lassen sich aber auch für jede Reaktionskomponente eine oder mehrere separate Eintrittsöffnungen vorsehen. Dabei muss aber zur Erzielung der gewünschten Rückströmung und der Verwirbelung an der Grenzfläche zwischen eintretenden Strahlen und der Rückströmung Sorge getragen werden, dass die eintretenden Strahlen möglichst parallel zur Mischkammerachse oder unter einem sehr spitzen Winkel von maximal 10° ausgerichtet sind.

Gemäss einer besonderen Ausführungsform mündet die Auslassöffnung in einen Auslasskanal, welchem ein Reinigungskolben zugeordnet ist, welcher in Reinigungsstellung die Stirnfläche des Ausstosskolbens tangiert.

Dieser Auslaufkanal mit Reinigungskolben schliesst sich zwar an die Ausführungsform des Mischkopfes gemäss US-A-3975128 an, er stellt aber lediglich eine Verbindung zwischen Mischkopf und Formhohlraum dar; ihm kommt also nicht die mit dem vorgenannten Mischkopf angestrebte Funktion als Beruhigungsstrecke zu. Insbesondere könnte der Reinigungskolben auch zum Androsseln des aus der Mischkammer austretenden Gemisches verwendet werden.

Eine weitere Ausführungsform ist gekennzeichnet durch die Zuordnung des Mischkopfes zu einem Formwerkzeug, dessen Formtrennebene auch zwischen der Eintrittsöffnung einerseits und der Ausstossstellung des Ausstosskolbens andererseits verläuft.

Bei dieser Ausführungsform ist dementsprechend die Eintrittsöffnung für die Reaktionskomponenten in der einen Formwerkzeughälfte angeordnet, während die Mischkammer selbst in der anderen Formhälfte gegenüberliegend vorgesehen ist, so dass der Formhohlraum dazwischen verläuft.

Diese Ausführungsform hat den besonderen Vorteil, dass die als Quellströmung aus der Mischkammer austretende Rückströmung unter rascher Geschwindigkeitsabnahme sich nach allen Seiten gleichmässig in den Formhohlraum verteilt. Es versteht sich, dass bei dieser Ausführungsform gegebenenfalls auch ein Angusskanal vorgesehen sein kann, so dass in diesem Fall die Mischkammer nicht direkt im Bereich des Formhohlraumes liegt. Ist für den Angusskanal kein Reinigungskolben vorgesehen, muss die Formtrennebene durch den Angusskanal in der Weise verlaufen, dass bei geöffnetem Formwerkzeug der im Angusskanal ausreagierte Gemischrest mit entformt werden kann.

Vorzugsweise ist die Tiefe der Mischkammer mittels des Ausstosskolbens einstellbar.

Nach einer weiteren besonderen Ausführungsform ist die Wandung der Mischkammer durch eine austauschbare, im Gehäuse fixierbare Einsatzhülse gebildet, und der Ausstosskolben weist einen austauschbaren Kopf auf, wobei jeweils eine Einsatzhülse bezüglich ihres Innendurchmessers und ein Kopf bezüglich seines Aussendurchmessers aufeinander abgestimmt sind.

Durch diese Massnahme lässt sich auch der Mischkammerdurchmesser den Erfordernissen anpassen, wodurch insbesondere der Mischkammerdruck beeinflussbar ist.

In einer Zeichnung ist der neue Mischkopf in mehreren Ausführungsbeispielen im Längsschnitt rein schematisch dargestellt und nachstehend näher erläutert. Es zeigen:

Fig. 1 die erste Ausführungsform des Mischkopfes,

Fig. 2 einen in eine Hälfte eines Formwerkzeuges integrierten Mischkopf und

Fig. 3 den Strömungsverlauf in der Mischkammer.

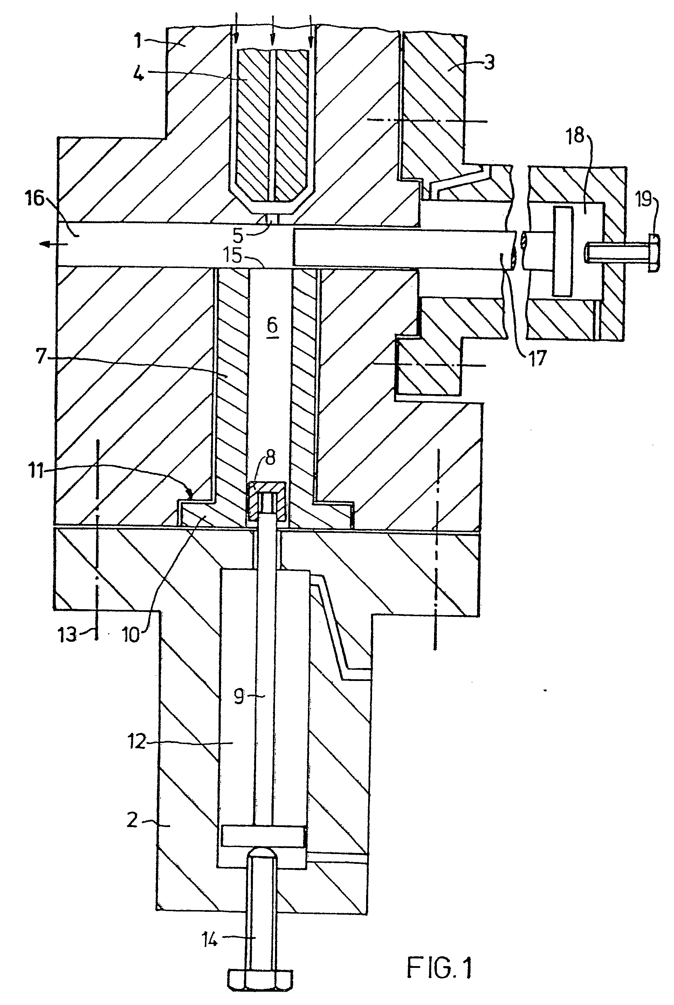

In Fig. 1 besteht der Mischkopf aus drei Gehäuseteilen 1, 2, 3. Im Gehäuseteil 1 ist eine Zweistoffdüse 4 angeordnet, deren Aufbau derjenigen gemäss DE-B-2 031 739 entspricht. Die Eintrittsöffnung 5 weist stirnseitig und axial in eine Mischkammer 6. Deren Wandung ist durch eine austauschbare Einsatzhülse 7 gebildet, in welcher der austauschbare Kopf 8 eines Ausstosskolbens 9 geführt ist. Zum Mischkopf gehören verschiedene solcher Einsatzhülsen 7 mit unterschiedlichen Innendurchmessern, wobei jeder Einsatzhülse 7 ein Kopf 8 entsprechenden Aussendurchmessers zugeordnet ist. Die Einsatzhülsen 7 weisen Zentrierkragen 10 auf, welche auf eine im Gehäuseteil 1 vorgesehene Zentrierringnut 11 abgestimmt sind. Der hydraulische Antrieb 12 des Ausstosskolbens 9 ist in einem Gehäuseteil 2, welches mittels Schrauben 13 am Gehäuseteil 1 befestigt ist und gleichzeitig zur Sicherung der Einsatzhülse 7 dient, angeordnet. Mittels einer Hubbegrenzungsschraube 14 lässt sich die Tiefe der Mischkammer 6 einstellen. Im Gehäuseteil 1 ist zwischen der Zweistoffdüse 4 und der Mischkammer 6 ein als Auslasskanal dienender Zwischenraum 16 vorgesehen, der in einen nicht dargestellten Formhohlraum öffnet. In dem Auslasskanal 16 ist ein Reinigungskolben 17 geführt, dessen hydraulischer Antrieb 18 im Gehäuseteil 3 angeordnet ist. Mittels einer Stellschraube 19 lässt sich der Reinigungskolben 17 auch zum Androsseln des Querschnittes der Auslassöffnung 15 einstellen. Es versteht sich von selbst, dass während des Mischvorganges die Eintrittsöffnung 5 nicht verdeckt werden darf.

Für den Fachmann ist es selbstverständlich, dass das Arbeiten der Zweistoffdüse 4 und der hydraulischen Antriebe 12 und 18 exakt aufeinander abgestimmt sein muss. Dabei schliesst bei Ende des Mischvorganges zunächst die Zweistoffdüse 4. Anschliessend betätigt der hydraulische Antrieb 12 den Ausstosskolben 9, der die Mischkammer 6 entleert. Nun wird schliesslich mittels des hydraulischen Antriebs 18 der Reinigungskolben 17 betätigt, welcher den Gemischrest aus dem Auslasskanal 16 ausstösst. Beim Einleiten eines neuen Mischvorganges laufen die Schritte in umgekehrter Reihenfolge ab.

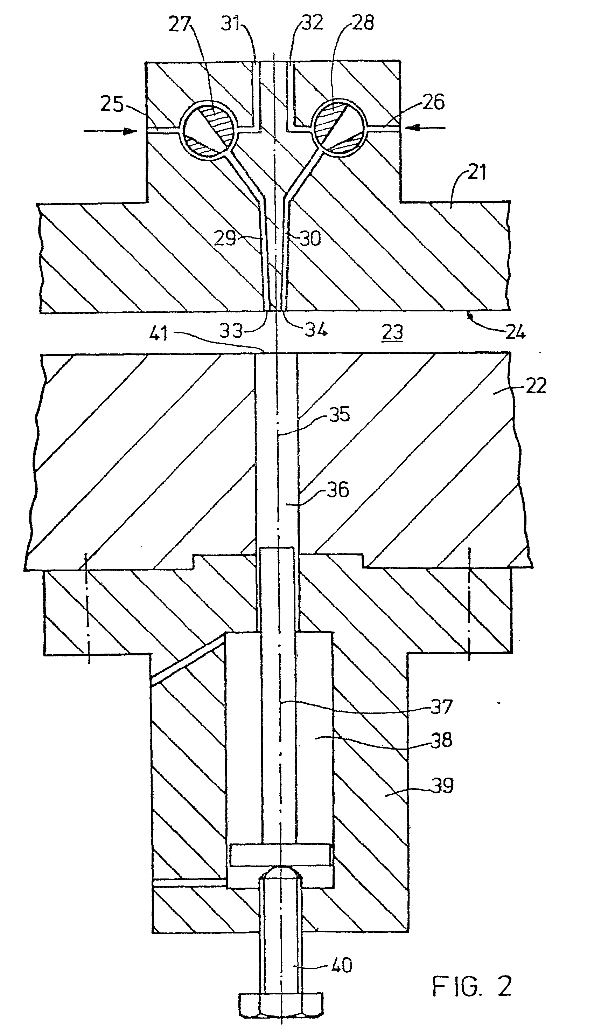

In Fig. 2 ist der Mischkopf in die Formhälften 21, 22 eines Formwerkzeuges derart an einer Stelle integriert, dass als Zwischenraum 23 der Formhohlraum durch ihn verläuft. Die Formtrennebene ist mit 24 bezeichnet. Zuleitungen 25, 26 für die Reaktionskomponenten Polyol und Isocyanat führen zu Umschaltventilen 27, 28, welche in der einen Stellung (wie dargestellt) die Zuleitungen 25, 26 mit Zuleitungsbohrungen 29, 30 und in der anderen Stellung mit Rücklaufleitungen 31, 32 verbinden. Die Zuleitungsbohrungen 29, 30 münden in Eintrittsöffnungen 33, 34, welche symmetrisch zu der Mittelachse 35 einer in der Formhälfte 22 gegenüberliegend angeordneten Mischkammer 36 vorgesehen sind. Sie schliessen zur Mittelachse einen Winkel von 3° ein. In der Mischkammer 36 ist ein Ausstosskolben 37 geführt, dessen hydraulischer Antrieb 38 in einem an der Formhälfte 22 befestigten Gehäuse 39 angeordnet ist. Eine Hubbegrenzungsschraube 40 erlaubt es, die Tiefe der Mischkammer 36 einzustellen. Die Austrittsöffnung der Mischkammer 36 ist mit 41 bezeichnet.

Es versteht sich, dass auch bei dieser Ausführungsform die Mischkammer 36 in einer austauschbaren Einsatzhülse angeordnet sein kann, der jeweils ein im Aussendurchmesser abgestimmter, auf dem Ausstosskolben 37 angeordneter, austauschbarer Kopf zugeordnet ist.

Entsprechend abgewandelte Ausführungsformen der in den Fig. 1 und 2 dargestellten Mischköpfe lassen sich auch als sogenannte «Anbaumischköpfe» an den Formhälften von Formwerkzeugen lösbar befestigen. Die Formtrennebene ist hierbei ebenfalls durch die Mischkammer geführt.

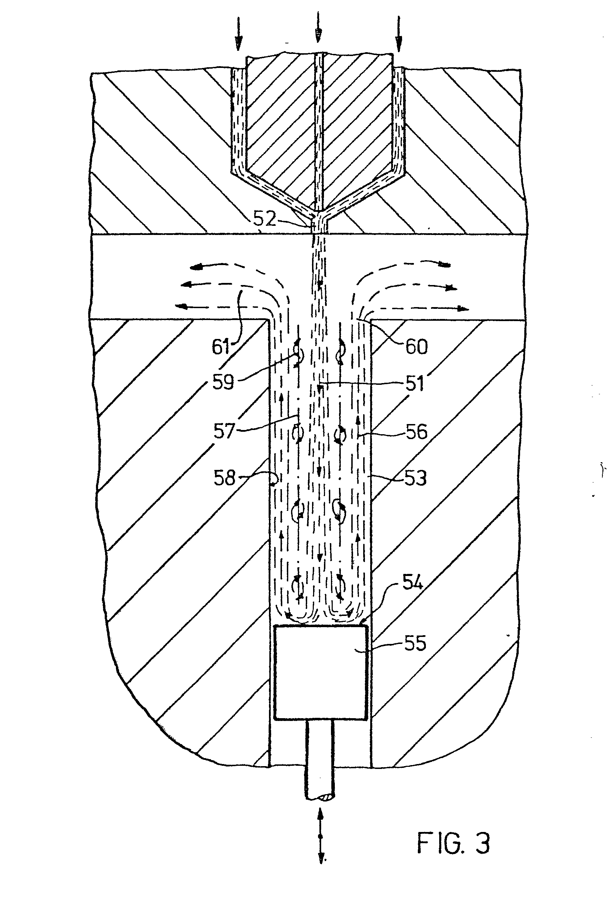

In Fig. 3 ist gezeigt, dass die Reaktionskomponenten als gemeinsamer Strahl 51 durch eine Eintrittsöffnung 52 zentral in eine Mischkammer 53 bis gegen die als Boden 54 dienende Stirnfläche eines Ausstosskolbens 55 injiziert werden. Dort wird dieser Strahl 51 umgelenkt. An der ringförmigen Grenzfläche 57 zwischen Strahl 51 und Rückströmung 56 sowie an der Wandung 58 bilden sich Turbulenzen 59, die eine intensive Vermischung gewährleisten. Die Rückströmung 56 verlässt die Mischkammer 53 durch eine Auslassöffnung 60 nach allen Seiten als Quellströmung 61, deren Geschwindigkeit in Strömungsrichtung in vorteilhafter Weise stark abnimmt, wobei die Strömung innerhalb kürzester Zeit laminar wird. Der Strahl 51 verursacht in der Quellströmung 61 keinerlei Störung, weil er in diese zentral eintritt.

## Patentansprüche

1. Verfahren zum Herstellen eines Kunststoff bildenden Reaktionsgemisches aus mindestens zwei fliessfähigen Reaktionskomponenten, wobei die Reaktionskomponenten stirnseitig in eine Mischkammer (6; 36; 53) eingedüst, an deren Boden (54) umgelenkt, im Gegenstrom zum eintretenden Strahl (51) zurückgeführt und dabei im Grenzflächenbereich (57) vermischt werden und anschliessend das fertige Reaktionsgemisch abgeführt wird, dadurch gekennzeichnet, dass der eintretende Strahl (51) durch einen zwischen der Eintrittsöffnung (5; 33, 34; 52) und der Mischkammer (6; 36; 53) vorhandenen Zwischenraum (16; 23) geführt und dem eintretenden Strahl (51) eine grössere Eindringtiefe (Mischkammertiefe) erlaubt wird als der äussere Durchmesser der Rückströmung (56) beträgt; dass das Reaktionsgemisch im Zwischenraum (16; 23) abgeführt wird und am Ende des Mischvorganges das restliche in der Mischkammer (6; 36; 53) befindliche Reaktionsgemisch selbstreinigend ausgestossen wird.

2. Verfahren nach Anspruch 1, dadurch gekennzeichnet, dass das erzeugte Reaktionsgemisch in Form einer Quellströmung (61) aus der Mischkammer (36; 53) abgeführt wird.

3. Verfahren nach Anspruch 1 oder 2, dadurch gekennzeichnet, dass jede Reaktionskomponente in Form mindestens eines separaten Strahles eingedüst wird.

4. Verfahren nach Anspruch 3, dadurch gekennzeichnet, dass die Strahlen unter einem Winkel von maximal 10° zur Achse (35) der Mischkammer (36) eingedüst werden.

5. Verfahren nach einem der Ansprüche 1 bis 4, dadurch gekennzeichnet, dass der Staudruck in der Mischkammer (6; 36, 53) durch Wahl des Querschnittsverhältnisses von eintretendem Strahl (51) zu Rückströmung (56) eingestellt wird.

6. Mischkopf zur Durchführung des Verfahrens nach einem der Ansprüche 1 bis 5, bestehend aus einem Gehäuse (2; 22) mit einer zylindrischen Mischkammer (6; 36; 53), in welche stirnseitig mindestens eine Eintrittsöffnung (5; 33, 34; 52) für die Reaktionskomponenten hineinweist und welche eine Auslassöffnung (15; 41; 60) für das Reaktionsgemisch aufweist, gekennzeichnet durch die Kombination folgender Merkmale:

a) Die Auslassöffnung (15; 41; 60) befindet sich auf der gleichen Seite wie die Eintrittsöffnung (5; 33, 34; 52),

b) das der Eintrittsöffnung (5; 33, 34; 52) gegenüberliegende Ende der Mischkammer (6; 36; 43) ist durch die Stirnfläche (54) eines Ausstosskolbens (9; 37; 55) gebildet,

c) die Tiefe der Mischkammer (6; 36; 53) ist grösser als ihr Durchmesser.

7. Mischkopf nach Anspruch 6, dadurch gekennzeichnet, dass die Auslassöffnung (15) in einen Auslaufkanal (16) mündet, welchem ein Reinigungskolben (17) zugeordnet ist, welcher in Reinigungsstellung die Stirnfläche des Ausstosskolbens (9) tangiert.

8. Mischkopf nach Anspruch 6, gekennzeichnet durch die Zuordnung zu einem Formwerkzeug (21, 22), dessen Formtrennebene (24) auch zwischen der Eintrittsöffnung (33, 34) einerseits und der Ausstossstellung des Ausstosskolbens (36) anderseits verläuft.

9. Mischkopf nach einem der Ansprüche 6 bis 8, dadurch gekennzeichnet, dass die Tiefe der Mischkammer (6; 36; 53) mittels des Ausstosskolbens (9; 37; 55) einstellbar ist.

10. Mischkopf nach einem der Ansprüche 6 bis 9, dadurch gekennzeichnet, dass die Wandung der Mischkammer (6) durch eine austauschbare, im Gehäuse (1) fixierbare Einsatzhülse (7) gebildet ist und der Ausstosskolben (9) einen austauschbaren Kopf (8) aufweist, wobei jeweils eine Einsatzhülse (7) bezüglich ihres Innendurchmessers und ein Kopf (8) bezüglich seines Aussendurchmessers aufeinander abgestimmt sind.

## Claims

1. Process for the production of a plastics-forming reaction mixture from at least two flowable reaction components, wherein the reaction components are sprayed into the front end of a mixing chamber (6; 36; 53), are deflected at the base (54) of the latter, are lead backwards countercurrently to the entering jet (51) while being mixed in the interface region (57) and then the prepared reaction mixture is removed, characterized in that the entering jet (51) is led through an intermediate space (16; 23) present between the inlet opening (5; 33, 34; 52) and the mixing chamber (6; 36; 53) and the entering jet (51) is allowed a greater depth of penetration (depth of the mixing chamber) that the size of the outer diameter of the backflowing stream (56); in that the reaction mixture is removed through the intermediate space (16; 23) and at the end of the mixing process the remaining reaction mixture present in the mixing chamber (6; 36; 53) is ejected in a self-cleaning manner.

2. Process according to Claim 1, characterized in that the reaction mixture produced is removed from the mixing chamber (36; 53) in the form of a radially-flowing stream (61).

3. Process according to Claim 1 or 2, characterized in that each reaction component is sprayed in in the form of at least one separate jet.

4. Process according to Claim 3, characterized in that the jets are sprayed in at an angle of at most 10° to the axis (35) of the mixing chamber (36).

5. Process according to one of Claims 1 to 4, characterized in that the dynamic pressure in the mixing chamber (6; 36; 53) is adjusted by means of the choice of the ratio of the cross-section of the entering jet (51) to that of the backflowing stream (56).

6. Mixing head for carrying out the process according to one of Claims 1 to 5, consisting of a housing (2; 22) containing a cylindrical mixing chamber (6; 36; 53), into the front end of which at least one inlet opening (5; 33, 34; 52) for the reaction components points and which has an outlet opening (15; 41; 60) for the reaction mixture, characterized by a combination of the following features:

a) the outlet opening (15; 41; 60) is at the same end as the inlet opening (5; 33, 34; 52),

b) the end of the mixing chamber (6; 36; 43) opposite the inlet opening (5; 33, 34; 52) is formed by the front face (54) of an ejecting piston (9; 37; 55),

c) the depth of the mixing chamber (6; 36; 53) is greater than its diameter.

7. Mixing head according to Claim 6, characterized in that the outlet opening (15) opens into a discharge channel (16) which is provided with a cleaning piston (17) which, in the cleaning position, touches the front face of the ejecting piston (9).

8. Mixing head according to Claim 6, characterized by being associated with a mould (21, 22), the mould parting plane (24) of which also extends between the inlet opening (33, 34) on the one side and the ejecting position of the ejecting piston (36) on the other.

9. Mixing head according to one of Claims 6 to 8, characterized in that the depth of the mixing chamber (6; 36; 53) can be adjusted by means of the ejecting piston (9; 37; 55).

10. Mixing head according to one of Claims 6 to 9, characterized in that the wall of the mixing chamber (6) is formed by an exchangeable inserted sleeve (7) which can be fixed in the housing (1) and the ejecting piston (9) has an exchangeable head (8), the internal diameter of the inserted sleeve (7) being in each case coordinated with the external diameter of the head (8).

## Revendications

1. Procédé de préparation d'un mélange réactionnel générateur de matière plastique, composé d'au moins deux composants réactionnels fluides ou semi-fluides, les composants réactionnels étant injectés dans une chambre de mélange (6; 36; 53), au niveau d'une face frontale de cette chambre, subissant un changement de direction sur le fond (54) de cette chambre, étant renvoyés à contre-courant par rapport au jet pénétrant (51) et étant alors mélangés entre eux dans la région de l'interface et le mélange réactionnel formé étant ensuite évacué, caractérisé en ce que le jet pénétrant (51) traverse un espace intermédiaire (16; 23) présent entre l'orifice d'entrée (5; 33, 34; 52) et la chambre de mélange (6; 36; 53) et qu'on laisse le jet pénétrant (51) parcourir une profondeur de pénétration (profondeur de la chambre de mélange) supérieure au diamètre extérieur du courant inverse (57); en ce que le mélange réactionnel contenu dans l'espace intermédiaire (16; 23) est évacué et que, à la fin du processus de mélange, le mélange réactionnel restant contenu dans la chambre de mélange (16; 36; 53) est éjecté avec un effet d'autonettoyage.

2. Procédé selon la revendication 1, caractérisé en ce que le mélange réactionnel produit est évacué de la chambre de mélange (36; 53) sous la forme d'un écoulement en source (61).

3. Procédé selon la revendication 1 ou 2, caractérisé en ce que chaque composant réactionnel est injecté sous la forme d'au moins un jet séparé.

4. Procédé selon la revendication 3, caractérisé en ce que les jets sont injectés en formant un angle de 10° au maximum par rapport à l'axe (35) de la chambre de mélange (36).

5. Procédé selon l'une des revendications 1 à 4, caractérisé en ce que la pression dynamique régnant dans la chambre de mélange (6; 36; 53) est réglée par le choix du rapport de la section du jet pénétrant (51) à la section du courant inverse (50).

6. Tête mélangeuse pour la mise en œuvre du procédé selon l'une des revendications 1 à 5, composée d'un corps (2; 22) présentant une chambre de mélange cylindrique (6; 36; 53) dans laquelle au moins un orifice d'entrée (5; 33, 34; 52) pour l'entrée des composants réactionnels débouche au droit d'une face frontale, et qui présente un orifice de sortie (15; 41; 60) pour le mélange réactionnel, caractérisé par la combinaison des caractéristiques suivantes:

a) l'orifice de sortie (15; 41; 60) se trouve du même côté que l'orifice d'entrée (5; 33, 34; 52),

b) l'extrémité de la chambre de mélange (6; 36; 53) qui est à l'opposé de l'orifice d'entrée (5; 33, 34; 52) est formée par la surface frontale (54) d'un piston d'éjection (9; 39; 55),

c) la profondeur de la chambre de mélange (6; 36; 53) est plus grande que son diamètre.

7. Tête mélangeuse selon la revendication 6, caractérisée en ce que l'orifice de sortie (15) débouche dans un canal de sortie (16) auquel est associé un piston de nettoyage (17) qui, dans la position de nettoyage, est tangent à la surface frontale du piston d'éjection (9).

8. Tête mélangeuse selon la revendication 6, caractérisée en ce qu'elle est combinée à un moule (21, 22) dont le plan de joint (24) s'étend également entre l'orifice d'entrée (33, 34) d'une part, et la position d'éjection du piston d'éjection (36) d'autre part.

9. Tête mélangeuse selon l'une des revendications 6 à 8, caractérisée en ce que la profondeur de la chambre de mélange (6, 36; 53) peut être réglée au moyen du piston d'éjection (9; 37; 55).

10. Tête mélangeuse selon l'une des revendications 6 à 9, caractérisée en ce que la paroi de la chambre de mélange (6) est formée par une douille rapportée interchangeable (7) qui peut être fixée dans le corps (1) et en ce que le piston d'éjection (9) présente une tête interchangeable (8), le diamètre intérieur de chaque douille rapportée (7) étant adapté au diamètre extérieur de la tête (8) correspondante.

FIG. 1

FIG. 2

FIG. 3